# EUROPÄISCHE PATENTSCHRIFT

(11) **EP 1 084 935 B1**
(45) Veröffentlichungstag und Bekanntmachung des Hinweises auf die Patenterteilung: **22.06.2005**
(21) Anmeldenummer: 00116273.4
(22) Anmeldetag: 09.08.2000
(51) Int. Cl.: B62D 21/11, B62D 21/15, B62D 29/00

(54) **Hilfsrahmenanordnung für einen Fahrzeugaufbau zur Aufnahme von Crashenergie**
Sub-frame for a vehicle body to absorb crash energy
Chassis auxiliaire d'un carrosserie de véhicule automobile pour absorber l'énergie de collision

(30) Priorität: 14.09.1999 DE 19943773
(43) Veröffentlichungstag der Anmeldung: 21.03.2001
(73) Patentinhaber: Volkswagen Aktiengesellschaft, 38436 Wolfsburg (DE)
(72) Erfinder: Grischow, Axel, 28199 Bremen (DE)
(74) Vertreter: Beck, Michael Rudolf

(56) Entgegenhaltungen:
- EP-A- 0 847 912
- EP-A- 0 941 912
- DE-A- 19 754 427

## Beschreibung

Die Erfindung bezieht sich auf eine Hilfsrahmenanordnung für einen Fahrzeugaufbau zur Aufnahme von Crashenergie nach dem Oberbegriff von Patentanspruch 1. Weiterhin bezieht sich die Erfindung auf einen Fahrzeugaufbau mit einer Hilfsrahmenanordnung.

Zum Schutz der Fahrgastzelle eines Fahrzeuges bei einem Front- oder Heckaufprall sind aus dem Stand-der Technik vielfältige Maßnahmen bekannt, um die in einem Crashfall auftretende Energie durch gezielte Verformungen zu absorbieren und so die auf die Fahrzeuginsassen wirkenden Beschleunigungen auf ein möglichst unkritisches Maß zu vermindern. Zudem ist ein Eindringen von Teilen der Fahrzeugstruktur in den Insassenbereich zu vermeiden.

Aus der DE 195 10 763 A1 ist bekannt, an einem Montagerahmen, der zur Aufhängung von Motor, Getriebe und Achsaggregaten ausgebildet ist, Deformationszonen vorzusehen. Diese in den Montagerahmen integrierten Deformationszonen dienen jedoch mehr dem Schutz der Antriebsaggregate bei Bagatellunfällen mit relativ geringer Stoßenergie.

Weiterhin ist aus der DE 24 26 050 C2 bekannt, einen den Motorraum umgebenden Frontbereich eines Fahrzeugaufbaus durch einen bodenseitig unter diesem angeordneten, geschlossenen Unterrahmen zu versteifen, wobei der Unterrahmen lediglich an seinen Eckpunkten mit dem Fahrzeugaufbau verbunden ist. Der Unterrahmen weist hierbei keine unmittelbare Tragfunktion für die Komponenten des Fahrzeugantriebes auf.

Bei der Anmelderin ist weiterhin intern bekannt, zur Verbesserung der Crashsicherheit von kleinen Personenkraftfahrzeugen separate, in Längsrichtung des Fahrzeugaufbaus anzuordnende Streben als Crashelemente zu verwenden, die im folgenden gemeinsam auch als Hilfsrahmenanordnung bezeichnet werden, wobei diese Hilfsrahmenanordnung nicht notwendigerweise geschlossen sein muss. Diese Streben werden an dem Fahrzeugrahmen in Bodennähe angebracht und verlaufen jeweils seitlich außen und im wesentlichen in Richtung der Längsachse des Fahrzeugaufbaus.

Aus der zwischenveröffentlichten EP 0 941 912 A1 ist ein Hilfsrahmen mit zwei Längsträgern bekannt, die durch ein flächenhaftes Versteifungselement miteinander verbunden sind. Die Längsträger erstrecken sich dabei im wesentlichen über die gesamte Länge des Motorraums und weisen Lagerböcke zur Aufnahme von Querlenkern des Fahrwerks auf.

Weiterhin ist aus der EP 0 847 912 A eine Hilfsrahmenanordnung mit den Merkmalen des oberbegriffes des Anspruchs 1 bekannt, um einen Motorraum nach unten abzudecken. Das Verschlusselement dient zudem zur Absorption von Crashenergie. Es ist über vertikale Seitenwangen an einem nicht näher dargestellten Ort am Fahrzeug befestigt.

Der Erfindung liegt die Aufgabe zugrunde, das Energieaufnahmevermögen eines kompakten Fahrzeugaufbaus für den Fall eines Front- und/oder Heckaufpralls mit einfachen Mitteln weiter zu erhöhen.

Diese Aufgabe wird durch eine Hilfsrahmenanordnung mit den Merkmalen von Patentanspruch 1 gelöst.

Durch die Anordnung des flächenhaften Crashelementes wird das Energieaufnahmepotential der Hilfsrahmenanordnung weiter erhöht. Die flächenhafte Erstreckung erlaubt einen großen Verformungsweg, über den die Crashenergie abgebaut werden kann, so dass die zusätzliche Energieabsorption relativ weich erfolgt. Das flächenhafte Crashelement kann zudem mit geringem Aufwand in die Fertigung des Hilfsrahmens integriert werden.

Das flächenhafte Crashelement kann als separates Bauteil lösbar mit den Streben verbunden werden, so dass für jede Komponente die Bauteileigenschaften hinsichtlich des Werkstoffes unabhängig voneinander optimiert werden können. Alternativ hierzu wird das flächenhafte Crashelement einstückig mit den Streben verbunden, wodurch sich eine einfache Montage ergibt.

Nach einer vorteilhaften Ausgestaltung der Erfindung weist das flächenhafte Crashelement in Längsrichtung des Fahrzeugaufbaus einen Absatz auf. Dieser Absatz ist solchermaßen ausgebildet, dass ein näher zu einer Fahrgastzelle des Fahrzeugaufbaus liegender Abschnitt des flächenhaften Crashelementes tiefer angeordnet ist, als ein näher zu einem Fahrzeugende liegender Abschnitt. In Falle eines Aufpralls kann hierdurch ein Eindringen in die Fahrgastzelle vermieden werden. Vielmehr erfolgt durch diese Ausgestaltung eine Ableitung des Hilfsrahmens unter die Fahrgastzelle.

Das Verschieben des flächenhaften Crashelementes unter die Fahrgastzelle läßt sich weiter verbessern, wenn an den näher zu der Fahrgastzelle des Fahrzeugaufbaus liegenden Abschnitt des flächenhaften Crashelementes ein zur Unterseite des Fahrzeugaufbaus geneigter Übergangsabschnitt anschließt, an den wiederum der tiefer angeordnete, näher zu dem Fahrzeugende liegende Abschnitt anschließt. Zudem wird ein gezieltes Stauchen des flächenhaften Crashelementes im Sinne eines Zusammenfaltens ermöglicht. Vorzugsweise schließt der geneigte Übergangsabschnitt jeweils weich gekrümmt an die betreffenden Abschnitte an.

Zur Begünstigung eines Zusammenfaltens sowie zur Gewährleistung eines relativ langen Verformungsweges ist der näher zu der Fahrgastzelle des Fahrzeugaufbaus liegende Abschnitt und der näher zu dem Fahrzeugende liegende Abschnitt des flächenhaften Crashelementes jeweils im wesentlichen eben ausgebildet. Dies vereinfacht zudem die Herstellbarkeit des flächenhaften Crashelementes.

In einer weiteren, vorteilhaften Ausgestaltung schließt das flächenhafte Crashelement an seinen Seitenrändern mit den Streben jeweils dicht ab. Die enge Anbindung gewährleistet eine stabile Verbindung, die nicht nur unter dem Gesichtspunkt der Schaffung eines Steifigkeitsverbundes sondern auch unter dem Gesichtspunkt einer einfachen Handhabung der Hilfsrahmenanordnung als Einheit bei der Fertigung bzw. Montage günstig ist. Überdies weist eine solche Verbindung eine hohe Schalldichtigkeit auf.

Vorzugsweise sind auch die Streben in Richtung auf die Fahrgastzelle abgesetzt ausgebildet, derart, daß ein näher zu der Fahrgastzelle liegender Abschnitt tiefer angeordnet ist, als ein näher zu einem Fahrzeugende liegender Abschnitt. Damit wird die Sicherheit gegen ein Eindringen in die Fahrgastzelle im Falle eines Crashs weiter verbessert.

Zur optimalen Raumnutzung sind die Streben vorzugsweise möglichst nahe an dem Rand des Fahrzeugaufbaus anzuordnen, wobei jedoch auf die Anordnung der Fahrzeugräder Rücksicht genommen werden muß. Eine in dieser Hinsicht besonders günstige Bauweise ergibt sich, wenn die Streben in Richtung auf die Fahrgastzelle zur Längsachse des Fahrzeugaufbaus hin eingezogen sind. In Weiterführung dieses Gedankens ist es vorteilhaft, daß die Streben ein kompaktes, vorzugsweise konstantes Querschnittsprofil aufweisen, das im Hinblick auf ein Stauchen in Längsrichtung ausgelegt werden kann.

In einer Variante der Erfindung weist die Hilfsrahmenanordnung anstelle oder in Ergänzung zu dem sich zwischen den Streben erstreckenden, flächenhaften Crashelement ein anderes flächenhaftes Crashelement auf, das sich von einer der Streben zu einem im wesentlichen oberhalb dieser Strebe angeordneten Seitenträger des Fahrzeugaufbaus erstreckt. Hierdurch läßt sich ebenfalls eine Verbesserung der Crashsicherheit, gegebenenfalls eine weitere Möglichkeit zur Erhöhung der Crashsicherheit erzielen.

Im Falle der zuvor genannten Variante ist es besonders günstig, wenn das andere flächenhafte Crashelement dicht gegen die zugehörige Strebe anliegt und zur dichten Anlage gegen den Seitenträger ausgebildet ist. Damit ergibt sich ein stabiler Steifigkeitsverbund, der zudem die Schalldichtigkeit weiter verbessert.

In einer weiteren Ausgestaltung ist zur Verbesserung der Herstellbarkeit das flächenhafte Crashelement mit einer im wesentlichen konstanten Wandstärke ausgebildet. Das flächenhafte Crashelement kann so beispielsweise als dünnwandiges Blechwerkstück gefertigt werden.

Zur Gewichtsersparnis besteht jedoch das flächenhafte Crashelement günstigerweise aus Kunststoff. Dabei kommen bevorzugt plastisch verformbaren Kunststoffe wie beispielsweise Noryl zum Einsatz, die ein hohes Energieaufnahmevermögen auch über einen längeren Verformungsweg hinweg bereitstellen.

In einer weiteren, vorteilhaften Ausgestaltung weist das flächenhafte Crashelement Versteifungsrippen auf. Durch eine gezielte Erhöhung der Eigensteifigkeit wird vermieden, daß das flächenhafte Crashelement durch den Fahrzeugantrieb zu störenden Schwingungen angeregt wird.

Die oben genannte Aufgabe wird außerdem durch einen Fahrzeugaufbau mit einer Hilfsrahmenanordnung zur Aufnahme von Crashenergie nach einer der vorgenannten Konfigurationen gelöst, bei dem das flächenhafte Crashelement im Front- und/oder Heckbereich eine Bodenabdeckung bildet. Die Hilfsrahmenanordnung übernimmt somit eine Doppelfunktion an dem Fahrzeugaufbau.

Für eine besonders kompakte Bauweise, die insbesondere für Kleinwagen von erheblicher Bedeutung ist, wird in einer vorteilhaften Ausgestaltung die Hilfsrahmenanordnung mit den Strebenenden an einem Achsrahmen, vorzugsweise einem Vorderachsrahmen, des Fahrzeugaufbaus befestigt.

In einer weiteren, vorteilhaften Ausgestaltung schließt das flächenhafte Crashelement einen Motorraum des Fahrzeugaufbaus nach unten hin ab, wodurch sich eine unter sicherheitstechnischen, aerodynamischen wie akustischen Gesichtspunkten optimale Anordnung ergibt.

Im folgenden wird die Erfindung anhand eines in der Zeichnung dargestellten Ausführungsbeispiels näher erläutert. Die Zeichnung zeigt in
- Figur 1: einen frontseitigen Abschnitt eines Fahrzeugaufbaus mit einer Hilfsrahmenanordnung in räumlicher Darstellung; und in
- Figur 2: eine Seitenansicht des Abschnittes von Figur 1.

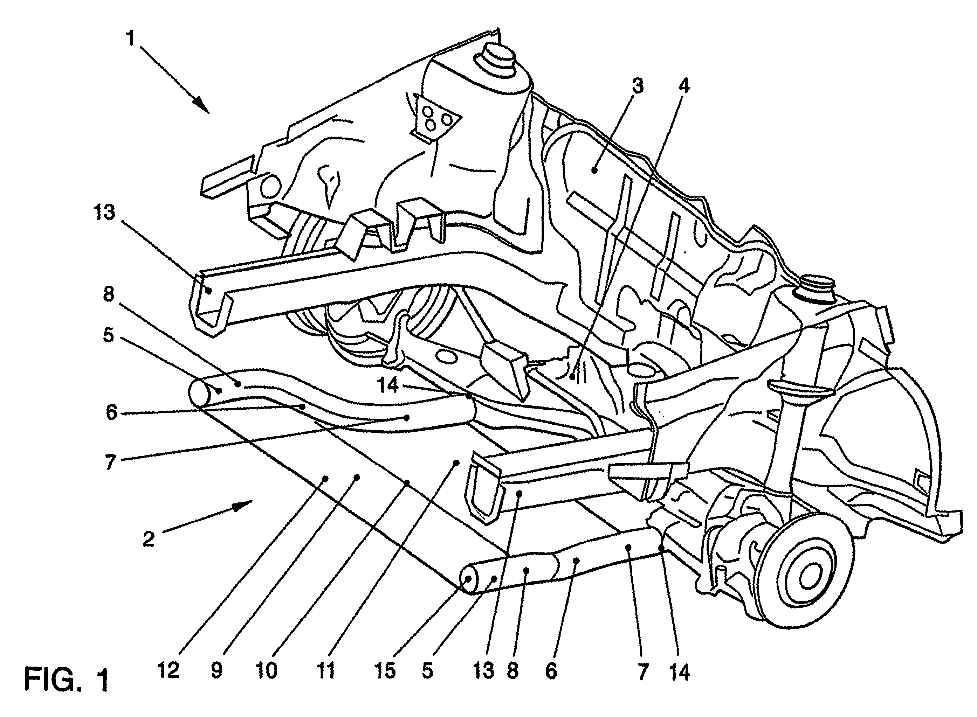

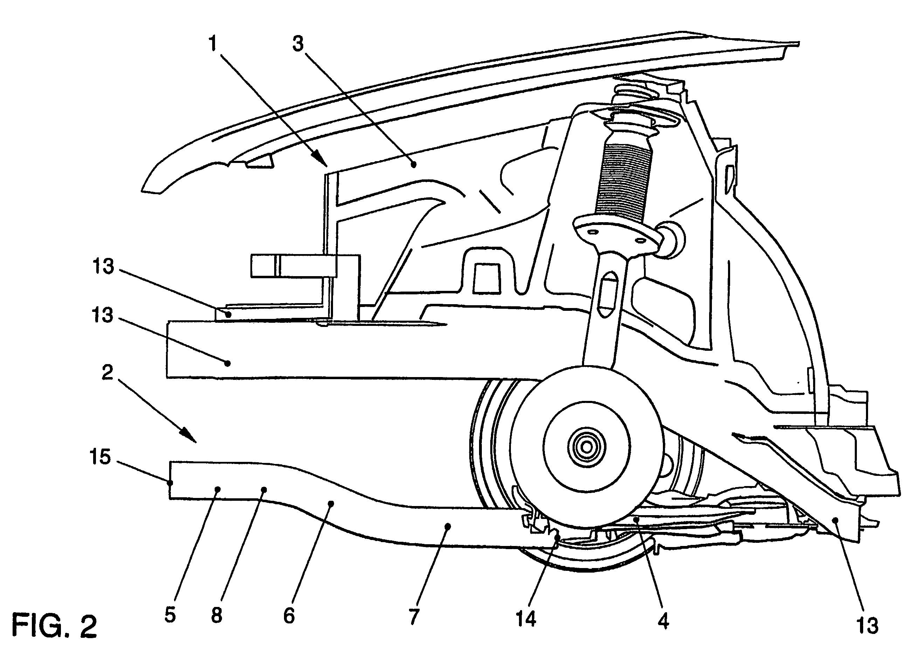

Das in den Figuren 1 und 2 dargestellte Ausführungsbeispiel zeigt eine Hilfsrahmenanordnung 2, die in einem Frontbereich eines Fahrzeugaufbaus 1 vorgesehen ist, um einen Motorraum bodenseitig zu begrenzen. Für den Fachmann ist ohne weiteres ersichtlich, daß eine gleichartige Hilfsrahmenanordnung auch am Fahrzeugheck angebracht werden kann, so daß von einer detailierten Beschreibung dieser Variante hier abgesehen wird.

Der Fahrzeugaufbau 1 umfaßt weiterhin eine selbsttragende Karosserie 3, die eine in den Figuren nicht näher dargestellte Fahrgastzelle bildet, sowie einen Vorderachsrahmen 4. Die Karosserie 3 weist eine die Fahrgastzelle von dem Motorraum trennende, sich im wesentlichen vertikal erstreckende Spritzwand auf, die an beiden Seiten bis über an dem Vorderachsrahmen 4 gelagerte Räder auskragt. Der Vorderachsrahmen 4 ist dabei über eine Feder-Dämpfer-Anordnung an der selbsttragenden Karosserie 3 gelagert.

Zur Aufnahme der Fahrzeugräder sind an der Karosserie 3 entsprechende Einbuchtungen vorgesehen. Etwas über der Höhe der Radachsen weist die Karosserie 3 weiterhin zwei sich zu einem Frontende des Fahrzeug erstreckende Seitenträger 13 auf, die im wesentlichen horizontal verlaufen und an beiden Seiten des Motorraumes angeordnet sind. Diese Träger 13 sind in ihrem über die Radkästen frontseitig hinausragenden Abschnitt schienenartig ausgebildet und weisen hier ein nach oben offenes, U-förmiges Profil auf. Jedoch können diese Seitenträger 13 auch mit einer anderen Profilform ausgebildet werden. Die Befestigung der in der Zeichnung nicht dargestellten Antriebsaggregate erfolgt über die Karosserie 3.

Im Falle eines Frontaufpralls absorbieren die über die Spritzwand nach vorne ragenden Abschnitte der Karosserie 3 einen Teil der Crashenergie, wobei die Integrität der Spritzwand möglichst erhalten bleibt, um ein Eindringen von Fahrzeugkomponenten in die Fahrgastzelle zu verhindern.

Ein weiterer Teil der Crashenergie wird von zwei im wesentlichen in Längsrichtung des Fahrzeugaufbaus verlaufenden Streben 5 aufgenommen, die jeweils mit einem Ende 14 an dem Fahrzeugaufbau 1 befestigt sind. Diese Streben 5 erstrecken sich jeweils im seitlich äußeren Bodenbereich des Fahrzeugaufbaus 1. Dabei ist jede Strebe 5 in Richtung auf die Fahrgastzelle abgesetzt ausgebildet, wobei ein näher zu der Fahrgastzelle liegender Abschnitt 7 tiefer angeordnet ist, als ein weiter entfernter Abschnitt 8, der näher zu dem Fahrzeugende liegt. Beide Abschnitte 7, 8 sind über einen leicht zum Boden geneigten Übergangsabschnitt 6 einstückig miteinander verbunden. In Querrichtung des Fahrzeuges sind die Streben 5 in Richtung auf die Fahrgastzelle zur Längsachse des Fahrzeugaufbaus hin eingezogen, um so einerseits eine möglichst breite Basis für die Hilfsrahmenanordnung 2 zu schaffen, andererseits den für die Fahrzeugräder nötigen Raum freizuhalten.

Jede der Streben 5 weist ein Querschnittsprofil auf, das einerseits im Hinblick auf eine gezielte Stauchung optimiert ist, andererseits eine kompakte Struktur besitzt, um den gerade bei Kleinwagen geringen Raum im Fahrzeugfrontbereich nicht unnötig zu verknappen. Vorzugsweise besitzen die Streben 5 ein konstantes Querschnittsprofil. In dem Ausführungsbeispiel wird ein zylinderstabartiges Profil eingesetzt, wodurch sich ein sehr geringer Fertigungsaufwand für die Streben 5 ergibt. Jedoch können auch andere Querschnitte, beispielsweise mit einem rechteckigen oder polygonalen Profil zum Einsatz kommen. Dabei können die Streben 5 sowohl aus Vollmaterial als auch in Form von Hohlprofilen gefertigt werden.

Die Streben 5 sind mit ihrem einen Ende 14 an dem Vorderachsrahmen 4 befestigt. Das jeweils gegenüberliegende Ende 15 ist frei oder wird über einen nicht dargestellten Querriegel geschlossen.

Zur Aufnahme zusätzlicher Crashenergie ist zwischen den Streben 5 ein flächenhaftes Crashelement 9 vorgesehen, das die Streben 5 miteinander verbindet. Dabei erstreckt sich das Crashelement 9 in Bezug auf die Längsrichtung des Fahrzeugaufbaus zwischen den Enden 14 und 15 jeder der beiden Streben 5.

In einer ersten Ausführungsvariante ist das Crashelement 9 mit den Streben 5 integral verbunden, d.h. das Crashelement 9 und die Streben 5 sind in einem Stück gefertigt. In einer zweiten Ausführungsvariante ist das Crashelement 9 ein separat gefertigtes Bauteil, das an seinen Seitenrändern mit den Streben 5 lösbar verbunden ist. Die Seitenränder des Crashelementes 9 schließen mit den Streben 5 jeweils dicht ab, so daß ein gemeinsamer Steifigkeitsverbund gebildet wird.

In dem Ausführungsbeispiel erstrecken sich die Seitenränder des Crashelementes 9 entlang der gesamten Länge der Streben 5. Jedoch ist es in beiden Ausführungsvarianten auch möglich, bei Bedarf das Crashelement 9 zwischen den Enden 14, 15 kürzer auszubilden.

Das flächenhafte Crashelement 9 weist in Längsrichtung des Fahrzeugaufbaus einen Absatz auf, der dem Absatz der Streben 5 entspricht. Somit ist wiederum ein näher zu der Fahrgastzelle des Fahrzeugaufbaus liegender Abschnitt 11 tiefer angeordnet ist, als ein näher zu dem Fahrzeugende liegender Abschnitt 12. Beide Abschnitte 11 und 12 des Crashelementes 9 sind durch einen geneigten Übergangsabschnitt 10 einstückig miteinander verbunden, der jeweils weich gekrümmt an die betreffenden Abschnitte 11 und 12 anschließt. Hierdurch wird weitestgehend sichergestellt, daß die Hilfsrahmenanordnung 2 im Falle eines Frontaufpralls nicht in den Fußraum der Fahrgastzelle eindringt, sondern bei ihrer Verformung letztlich unter den Fahrzeugboden abtaucht.

Wie aus Figur 1 zu erkennen ist, sind die Abschnitte 11 und 12 des flächenhaften Crashelementes 9 jeweils im wesentlichen eben mit einer konstanten Wandstärke ausgebildet, so daß dieses insgesamt aus einem dünnwandigen Blech hergestellt werden kann. Zur Verbesserung der Eigensteifigkeit, beispielsweise zur Erleichterung der Handhabung oder auch zur Unterdrückung von Schwingungen kann das flächenhafte Crashelement 9 verrippt werden.

Aus Gründen der Gewichtsersparnis werden jedoch das flächenhafte Crashelement 9 und die gegebenenfalls einstückig damit verbundenen Streben 5 vorzugsweise aus Kunststoff hergestellt. Dabei eignen sich besonders plastisch verformbare Kunststoffe mit einem hohen Energieaufnahmevermögen. Im vorliegenden Ausführungsbeispiel ist das Crashelement 9 aus Noryl gefertigt. Bei der mehrteiligen Variante bestehen die Streben 5 hingegen bevorzugt aus einem metallischen Werkstoff.

Wie aus Figur 1 weiter zu erkennen ist, schließt das flächenhafte Crashelement 9 einen Motorraum des Fahrzeugaufbaus 1 nach unten hin ab, so daß die Hilfsrahmenanordnung 2 nicht nur die Funktion der zusätzlichen Aufnahme von Crashenergie übernimmt, sondern gleichzeitig auch die Funktion einer Bodenabdeckung zum Zweck der Verringerung von Schallemissionen. Zu diesem Zweck kann das flächenhafte Crashelement 9 auf der zum Motorraum weisenden Seite weiterhin mit einem zusätzlichen Element aus schallisolierendem Material versehen werden. Überdies können mit dem Crashelement 9 die aerodynamischen Eigenschaften an einer Fahrzeugunterseite in einfacher Weise optimiert werden.

In einer zusätzlichen Variante des Ausführungsbeispiels sind weitere, in der Zeichnung nicht dargestellte flächenhafte Crashelemente vorgesehen, die sich jeweils von einer der Streben 5 zu dem in wesentlichen oberhalb der jeweiligen Strebe 5 angeordneten Seitenträger 13 der Karosserie 3 erstrecken. Zur Schallabdichtung des Motorraumes liegen auch diese weiteren flächenhaften Crashelemente dicht gegen die zugehörige Strebe 5 und den entsprechenden Seitenträger 13 vorzugsweise jeweils außenseitig an. Die weiteren flächenhaften Crashelemente können ebenfalls mit einem Absatz versehen werden, der eine gezielte, das Eindringen in die Fahrgastzelle vermeidende Verformung erlaubt. Zudem können die weiteren flächenhaften Crashelemente wiederum mit einer Verrippung versehen sein.

In einer weiteren Variante des Ausführungsbeispiels werden lediglich die weiteren flächenhaften Crashelemente vorgesehen, die sich jeweils von den Streben 5 zu den Seitenträgem 13 erstrecken. Auch in diesen Fall ergibt sich eine Steigerung des Energieaufnahmevermögens der Hilfsrahmenanordnung 2.

### BEZUGSZEICHENLISTE

- 1: Fahrzeugaufbau
- 2: Hilfsrahmenanordnung
- 3: selbsttragende Fahrzeugkarosserie
- 4: Vorderachsträger
- 5: Strebe
- 6: Übergangsabschnitt der Strebe
- 7: näher zu der Fahrgastzelle liegender Abschnitt der Strebe
- 8: näher zu einem Fahrzeugende liegender Abschnitt der Strebe
- 9: flächenhaftes Crashelement
- 10: Übergangsabschnitt des flächenhaften Crashelementes
- 11: näher zu der Fahrgastzelle liegender Abschnitt des flächenhaften Crashelementes
- 12: näher zu einem Fahrzeugende liegender Abschnitt des flächenhaften Crashelementes
- 13: Seitenträger
- 14: Ende der Strebe
- 15: anderes Ende der Strebe

## Patentansprüche

1. Hilfsrahmenanordnung für einen Fahrzeugaufbau zur Aufnahme von Crashenergie mit zwei im wesentlichen in Längsrichtung des Fahrzeugaufbaus verlaufenden Streben (5) im Front- oder Heckbereich desselben, die sich jeweils seitlich außen im Bodenbereich des Fahrzeugaufbaus (1) erstrecken, und mit einem flächenhaften Crashelement (9), das mit beiden Streben (5) verbunden ist und sich in bezug auf die Längsrichtung des Fahrzeugaufbaus (1) zwischen den Enden (14, 15) der Streben (5) erstreckt, **dadurch gekennzeichnet, daß** ein am Fahrzeugaufbau abgestützter Achsrahmen (4) vorgesehen ist, an dem die Fahrzeugräder angelenkt sind, und daß die Streben (5) und das flächenhafte Crashelement (9) in bezug auf die Längsrichtung eine vor bzw. hinter dem Achsrahmen (4) angeordnete Einheit bilden, die über die Enden der Streben an dem Achsrahmen (4) befestigt ist.

2. Hilfsrahmenanordnung für einen Fahrzeugaufbau nach Anspruch 1, **dadurch gekennzeichnet, daß** das flächenhafte Crashelement (9) einstückig mit den Streben (5) verbunden ist.

3. Hilfsrahmenanordnung für einen Fahrzeugaufbau nach Anspruch 1, **dadurch gekennzeichnet, daß** das flächenhafte Crashelement (9) lösbar mit den Streben (5) verbunden ist.

4. Hilfsrahmenanordnung für einen Fahrzeugaufbau nach einem der Ansprüche 1 bis 3, **dadurch gekennzeichnet, daß** das flächenhafte Crashelement (9) in Längsrichtung des Fahrzeugaufbaus einen Absatz aufweist, derart, daß ein näher zu einer Fahrgastzelle des Fahrzeugaufbaus liegender Abschnitt (11) des flächenhaften Crashelementes (9) tiefer angeordnet ist, als ein näher zu einem Fahrzeugende liegender Abschnitt (12).

5. Hilfsrahmenanordnung für einen Fahrzeugaufbau nach Anspruch 4, **dadurch gekennzeichnet, daß** an den näher zu der Fahrgastzelle des Fahrzeugaufbaus liegenden Abschnitt (11) des flächenhaften Crashelementes (9) ein zur Unterseite des Fahrzeugaufbaus geneigter Übergangsabschnitt (10) anschließt, an den wiederum der tiefer angeordnete, näher zu dem Fahrzeugende liegende Abschnitt (12) anschließt.

6. Hilfsrahmenanordnung für einen Fahrzeugaufbau nach Anspruch 5, **dadurch gekennzeichnet, daß** der geneigte Übergangsabschnitt (10) jeweils weich gekrümmt an die betreffenden Abschnitte (11, 12) anschließt.

7. Hilfsrahmenanordnung für einen Fahrzeugaufbau nach einem der Ansprüche 3 bis 6, **dadurch gekennzeichnet, daß** der näher zu der Fahrgastzelle des Fahrzeugaufbaus liegenden Abschnitt (11) und der näher zu dem Fahrzeugende liegende Abschnitt (12) des flächenhaften Crashelementes (9) jeweils im wesentlichen eben ausgebildet sind.

8. Hilfsrahmenanordnung für einen Fahrzeugaufbau nach einem der Ansprüche 1 bis 7, **dadurch gekennzeichnet, daß** das flächenhafte Crashelement (9) an seinen Seitenrändern mit den Streben (5) jeweils dicht abschließt.

9. Hilfsrahmenanordnung für einen Fahrzeugaufbau nach einem der Ansprüche 1 bis 8, **dadurch gekennzeichnet, daß** die Streben (5) in Richtung auf die Fahrgastzelle abgesetzt ausgebildet sind, derart, daß ein näher zu der Fahrgastzelle liegender Abschnitt (7) tiefer angeordnet ist, als ein näher zu einem Fahrzeugende liegender Abschnitt (8).

10. Hilfsrahmenanordnung für einen Fahrzeugaufbau nach einem der Ansprüche 1 bis 9, **dadurch gekennzeichnet, daß** die Streben (5) in Richtung auf die Fahrgastzelle zur Längsachse des Fahrzeugaufbaus hin eingezogen sind.

11. Hilfsrahmenanordnung für einen Fahrzeugaufbau nach einem der Ansprüche 1 bis 10, **dadurch gekennzeichnet, daß** die Streben (5) ein kompaktes, vorzugsweise konstantes Querschnittsprofil aufweisen.

12. Hilfsrahmenanordnung für einen Fahrzeugaufbau nach einem der Ansprüche 1 bis 11, **dadurch gekennzeichnet, daß** die Hilfsrahmenanordnung (2) anstelle oder in Ergänzung zu dem sich zwischen den Streben (5) erstreckenden, flächenhaften Crashelement (9) ein anderes flächenhaftes Crashelement aufweist, das sich von einer der Streben (5) zu einem im wesentlichen oberhalb dieser Strebe (5) angeordneten Seitenträger (12) an einer selbsttragenden Karosserie (3) des Fahrzeugaufbaus erstreckt.

13. Hilfsrahmenanordnung für einen Fahrzeugaufbau nach Anspruch 12, **dadurch gekennzeichnet, daß** das andere flächenhafte Crashelement (9) dicht gegen die zugehörige Strebe (5) anliegt und zur dichten Anlage gegen den Seitenträger (12) ausgebildet ist.

14. Hilfsrahmenanordnung für einen Fahrzeugaufbau nach einem der Ansprüche 1 bis 13, **dadurch gekennzeichnet, daß** das flächenhafte Crashelement (9) eine konstante Wandstärke aufweist.

15. Hilfsrahmenanordnung für einen Fahrzeugaufbau nach einem der Ansprüche 1 bis 14, **dadurch gekennzeichnet, daß** das flächenhafte Crashelement (9) aus Kunststoff besteht.

16. Hilfsrahmenanordnung für einen Fahrzeugaufbau nach Anspruch 15, **dadurch gekennzeichnet, daß** das flächenhafte Crashelement (9) aus einem plastisch verformbaren Kunststoff, vorzugsweise Noryl, besteht.

17. Hilfsrahmenanordnung für einen Fahrzeugaufbau nach einem der Ansprüche 1 bis 16, **dadurch gekennzeichnet, daß** das flächenhafte Crashelement (9) Versteifungsrippen aufweist.

18. Fahrzeugaufbau mit einer Hilfsrahmenanordnung (2) zur Aufnahme von Crashenergie nach einem der vorgenannten Ansprüche, bei dem das flächenhafte Crashelement (9) im Front- und/oder Heckbereich des Fahrzeugaufbaus (1) eine Bodenabdeckung bildet.

19. Fahrzeugaufbau nach Anspruch 18, **dadurch gekennzeichnet, daß** die Hilfsrahmenanordnung (2) mit den Strebenenden (14) an einem Achsrahmen, vorzugsweise einem Vorderachsrahmen(4), des Fahrzeugaufbaus (1) befestigt ist.

20. Fahrzeugaufbau nach Anspruch 18 oder 19, **dadurch gekennzeichnet, daß** das flächenhafte Crashelement (9) einen Motorraum des Fahrzeugaufbaus (1) nach unten hin abschließt.

## Claims

1. Sub-frame for a vehicle body to absorb crash energy, having two struts (5) in the front or rear region of the vehicle body, which struts run essentially in the longitudinal direction of the same and extend in each case laterally outwards in the floor region of the vehicle body (1), and having a two-dimensional crash element (9) which is connected to the two struts (5) and, with respect to the longitudinal direction of the vehicle body (1), extends between the ends (14, 15) of the struts (5), **characterized in that** an axle frame (4), which is supported on the vehicle body and to which the vehicle wheels are coupled, is provided, and **in that** the struts (5) and the two-dimensional crash element (9) form, with respect to the longitudinal direction, a unit which is arranged upstream or downstream of the axial frame (4) and is fastened to the axle frame (4) via the ends of the struts.

2. Sub-frame for a vehicle body according to Claim 1, **characterized in that** the two-dimensional crash element (9) is connected integrally to the struts (5).

3. Sub-frame for a vehicle body according to Claim 1, **characterized in that** the two-dimensional crash element (9) is connected releasably to the struts (5).

4. Sub-frame for a vehicle body according to one of Claims 1 to 3, **characterized in that** the two-dimensional crash element (9) has an offset in the longitudinal direction of the vehicle body in such a manner that a section (11) of the two-dimensional crash element (9) that lies closer to a passenger cell of the vehicle body is arranged lower down than a section (12) lying closer to an end of the vehicle.

5. Sub-frame for a vehicle body according to Claim 4, **characterized in that that** section (11) of the two-dimensional crash element (9) that lies closer to the passenger cell of the vehicle body is adjoined by a transition section (10) which is inclined towards the lower side of the vehicle body and is adjoined in turn by the section (12) which is arranged lower down and lies closer to the end of the vehicle.

6. Sub-frame for a vehicle body according to Claim 5, **characterized in that** the inclined transition section (10) adjoins the relevant sections (11, 12) in each case in a gently curved manner.

7. Sub-frame for a vehicle body according to one of Claims 3 to 6, **characterized in that that** section (11) of the two-dimensional crash element (9) which lies closer to the passenger cell of the vehicle body and that section (12) of the two-dimensional crash element (9) which lies closer to the end of the vehicle are in each case of essentially planar design.

8. Sub-frame for a vehicle body according to one of Claims 1 to 7, **characterized in that** the two-dimensional crash element (9) is in each case tightly closed off at its side edges by the struts (5).

9. Sub-frame for a vehicle body according to one of Claims 1 to 8, **characterized in that** the struts (5) are designed in an offset manner in the direction of the passenger cell such that a section (7) which lies closer to the passenger cell is arranged lower down than a section (8) which lies closer to an end of the vehicle.

10. Sub-frame for a vehicle body according to one of Claims 1 to 9, **characterized in that** the struts (5) are tapered in the direction of the passenger cell towards the longitudinal axis of the vehicle body.

11. Sub-frame for a vehicle body according to one of Claims 1 to 10, **characterized in that** the struts (5) have a compact, preferably constant cross-sectional profile.

12. Sub-frame for a vehicle body according to one of Claims 1 to 11, **characterized in that** the sub-frame (2) has, instead of or in addition to the two-dimensional crash element (9) extending between the struts (5), another two-dimensional crash element which extends from one of the struts (5) to a side member (12), which is arranged essentially above this strut (5), on the self-supporting bodywork (3) of the vehicle body.

13. Sub-frame for a vehicle body according to Claim 12, **characterized in that** the other two-dimensional crash element (9) bears tightly against the associated strut (5) and is designed to tightly bear against the side member (12).

14. Sub-frame for a vehicle body according to one of Claims 1 to 13, **characterized in that** the two-dimensional crash element (9) has a constant wall thickness.

15. Sub-frame for a vehicle body according to one of Claims 1 to 14, **characterized in that** the two-dimensional crash element (9) consists of plastic.

16. Sub-frame for a vehicle body according to Claim 15, **characterized in that** the two-dimensional crash element (9) consists of a plastically deformable plastic, preferably Noryl.

17. Sub-frame for a vehicle body according to one of Claims 1 to 16, **characterized in that** the two-dimensional crash element (9) has stiffening ribs.

18. Vehicle body having a sub-frame (2) to absorb crash energy according to one of the abovementioned claims, in which the two-dimensional crash element (9) in the front and/or rear region of the vehicle body (1) forms a floor covering.

19. Vehicle body according to Claim 18, **characterized in that** the sub-frame (2) is fastened by the strut ends (14) to an axle frame, preferably a front axle frame (4), of the vehicle body (1).

20. Vehicle body according to Claim 18 or 19, **characterized in that** the two-dimensional crash element (9) downwardly closes off an engine compartment of the vehicle body (1).

## Revendications

1. Dispositif de cadre auxiliaire d'une caisse de véhicule pour absorber l'énergie de collision, avec deux renforts (5) s'étendant principalement selon le sens longitudinal de la caisse de véhicule dans la partie avant ou arrière de celui-ci, lesquels s'avancent chacun latéralement à l'extérieur au niveau du plancher de la caisse de véhicule (1) et avec un absorbeur d'impact (9) de forme plate lequel est relié aux deux renforts (5) et s'étend entre les extrémités (14, 15) des renforts (5) selon le sens longitudinal de la caisse de véhicule (1), **caractérisé en ce qu'**on a prévu un cadre d'essieu (4) appuyé sur la caisse de véhicule et sur lequel les roues du véhicule sont articulées et **en ce que** les renforts (5) et l'absorbeur de choc de forme plate (9) constitue une unité disposée devant ou derrière le cadre d'essieu (4) par rapport au sens longitudinal, laquelle unité est fixée au cadre d'essieu (4) via les extrémités des renforts.

2. Dispositif de cadre auxiliaire pour une caisse de véhicule suivant la revendication 1, **caractérisé en ce que** l'absorbeur d'impact de forme plate (9) est relié aux renforts (5) pour former une seule pièce.

3. Dispositif de cadre auxiliaire pour une caisse de véhicule suivant la revendication 1, **caractérisé en ce que** l'absorbeur d'impact de forme plate (9) est relié aux renforts (5) de manière amovible.

4. Dispositif de cadre auxiliaire pour une caisse de véhicule selon l'une quelconque des revendications 1 à 3, **caractérisé en ce que** l'absorbeur de choc de forme plate (9) présente, dans le sens longitudinal de la caisse de véhicule, un décrochement de manière telle qu'une partie (11) de l'absorbeur de choc de forme plate (9) se trouvant le plus près de l'habitacle de la caisse de véhicule est disposée plus bas qu'une partie (12) située plus près de l'extrémité du véhicule.

5. Dispositif de cadre auxiliaire pour une caisse de véhicule selon la revendication 4, **caractérisé en ce que**, sur la partie (11) de l'absorbeur de chocs de forme plate (9) la plus proche de l'habitacle de la caisse de véhicule, se raccorde une partie transitoire (10) inclinée par rapport au soubassement de la caisse de véhicule, sur laquelle, à son tour, se raccorde la partie (12) disposée plus bas et plus proche de l'extrémité du véhicule.

6. Dispositif de cadre auxiliaire pour une caisse de véhicule selon la revendication 5, **caractérisé en ce que** la partie transitoire (10) inclinée se raccorde respectivement aux parties concernées (11, 12) par des courbes douces.

7. Dispositif de cadre auxiliaire pour une caisse de véhicule selon l'une quelconque des revendications 3 à 6, **caractérisé en ce que** la partie (11) de l'absorbeur de choc (9) la plus proche de l'habitacle de la caisse de véhicule et la partie (12) la plus proche de l'extrémité du véhicule sont réalisées chacune selon une forme quasiment lisse.

8. Dispositif de cadre auxiliaire pour une caisse de véhicule selon l'une quelconque des revendications 1 à 7, **caractérisé en ce que** les bords latéraux de l'absorbeur de choc (9) de forme plate se terminent chacun par les renforts (5) de manière étanche.

9. Dispositif de cadre auxiliaire pour une caisse de véhicule selon l'une quelconque des revendications 1 à 8, **caractérisé en ce que** les renforts (5) sont réalisés de manière décalée en direction de l'habitacle de manière telle qu'une partie (7) plus proche de l'habitacle est disposée plus bas qu'une partie (8) plus proche de l'extrémité du véhicule.

10. Dispositif de cadre auxiliaire pour une caisse de véhicule selon l'une quelconque des revendications 1 à 9, **caractérisé en ce que** les renforts (5) sont renfoncés en direction de l'habitacle suivant l'axe longitudinal de la caisse de véhicule.

11. Dispositif de cadre auxiliaire pour une caisse de véhicule selon l'une quelconque des revendications 1 à 10, **caractérisé en ce que** les renforts (5) présentent un profil de section transversale compact et, de préférence, constant.

12. Dispositif de cadre auxiliaire pour une caisse de véhicule selon l'une quelconque des revendications 1 à 11, **caractérisé en ce que** le dispositif de cadre auxiliaire (2) présente, à la place de ou en complément à l'absorbeur de choc de forme plate (9) s'étendant entre les renforts (5), un autre absorbeur de choc de forme plate qui s'étend depuis un des renforts (5) jusqu'à un longeron latéral (12) disposé quasiment au-dessus de ce renfort (5) et s'étend à une carrosserie autoportante (3) de la caisse de véhicule.

13. Dispositif de cadre auxiliaire pour une caisse de véhicule selon la revendication 12, **caractérisé en ce que** l'autre absorbeur de choc (9) de forme plate est en contact avec les renforts respectifs (5) et est réalisé pour former un aménagement étanche par rapport au longeron latéral (12).

14. Dispositif de cadre auxiliaire pour une caisse de véhicule selon l'une quelconque des revendications 1 à 13, **caractérisé en ce que** l'absorbeur de choc de forme plate (9) présente une épaisseur de paroi constante.

15. Dispositif de cadre auxiliaire pour une caisse de véhicule selon l'une quelconque des revendications 1 à 14, **caractérisé en ce que** l'absorbeur de choc de forme plate (9) est réalisé en matière synthétique.

16. Dispositif de cadre auxiliaire pour une caisse de véhicule selon la revendication 15, **caractérisé en ce que** l'absorbeur de choc de forme plate (9) est réalisé en matière synthétique plastique déformable, de préférence en Noryl.

17. Dispositif de cadre auxiliaire pour une caisse de véhicule selon l'une quelconque des revendications 1 à 16, **caractérisé en ce que** l'absorbeur de choc de forme plate (9) présente des nervures de renforcement.

18. Caisse de véhicule avec un dispositif de cadre auxiliaire (2) pour absorber l'énergie de collision selon l'une quelconque des revendications précédentes, sur laquelle l'absorbeur de chocs de forme plate (9) constitue un recouvrement de plancher à l'avant ou à l'arrière de la caisse de véhicule (1).

19. Caisse de véhicule selon la revendication 18, **caractérisée en ce que** le dispositif de cadre auxiliaire (2) est fixé, par les extrémités de renforts (14), à un cadre d'essieu, de préférence à un cadre d'essieu avant (4) de la caisse de véhicule (1).

20. Caisse de véhicule selon la revendication 18 ou 19, **caractérisée en ce que** l'absorbeur de chocs de forme plate (9) se termine, en bas, par un compartiment moteur de la caisse de véhicule (1).
